# EUROPEAN PATENT APPLICATION

(11) **EP 0 903 608 A2**
(43) Date of publication of application: **24.03.1999**
(21) Application number: 98307534.2
(22) Date of filing: 16.09.1998
(51) Int. Cl.: G02B 26/08

(54) **Beam steerer**

(30) Priority: 20.09.1997 GB 9719975
(71) Applicant: MATRA MARCONI SPACE UK LIMITED, Stanmore Middlesex HA7 4LY (GB)
(72) Inventor: Lewis, Jeffrey Wyn, Luton, Bedfordshire LU4 9HQ (GB)
(74) Representative: Waters, Jeffrey

(57) **Abstract**

Beam steerers are used in optical communications to direct a light signal towards a selected angular direction. Conventionally, the light signal is finely steered by employing mirrors to reflect the light signal. A beam steerer, arranged to direct a light signal in a free space optical communications system includes a pair 6,7 of lenses, through which a light signal 17 is transmissible, the lenses having opposite and substantially equal optical power, and displacing means 8,9 for translating one lens with respect to the other, transverse to an optical axis of the lenses. The provision of lenses permits the angular deflection of the beam per unit distance translation of a lens to be selected, as this is dependent on the optical power of the lenses. Selection of this ratio is not possible with mirror-based beam steerers.

## Description

This invention relates to beam steerers arranged to direct light signals in free space optical communications systems.

The terms "light" and "optical" as used in this patent specification are not intended to be confined to visible light, as light of any wavelength may be employed in free space optical communications.

Free space optical communications typically involves the transfer of information, from one point to another, as a modulation impressed on a light beam, such as a laser beam. Beam steerers are employed in free space optical communications systems to steer very narrow light signals, which are of the order of microradians to a few tens of microradians wide, with sufficient accuracy to ensure that a receiver is continuously illuminated.

The angular range over which a light signal is steered may be very large, the solid angle sometimes extending to greater than a hemisphere. Hence, beam steering typically is carried out in two stages. The first stage employs a coarse steering mechanism, which points the beam approximately in the desired direction. The second stage employs a fine steering mechanism, which removes the residual pointing error so that the beam illuminates accurately the desired point.

In order to effect fine steering of the light signal, conventional beam steerers employ tiltable mirrors, arranged to reflect the light signal towards the desired direction.

A problem which may be encountered with such beam steerers is that, in order to steer the light signal through a small angle, the mirrors have to be moved precisely at high speed by very small amounts.

A beam steerer suitable for laser radar applications is described in "Agile Beam Steering Using Binary Optics Microlens Arrays" (Goltsos et al, Optical Engineering, November 1990, Vol. 9, No. 11, Page 1392). This article discloses a microlens array being employed to sweep a wide laser beam through large angles. However, the microlens array causes the incident beam to be split up, which is undesirable in the field of optical communications as the laser beam carries information.

The invention provides a beam steerer arranged to direct a light signal in a free space optical communications system, the beam steerer having a pair of lenses through which a light signal is transmissible, the lenses having opposite and substantially equal optical power, and displacing means for translating one lens with respect to the other, transverse to an optical axis of the lenses, in order to steer the light signal.

The provision of lenses permits selection of the angular deflection of the beam per unit distance translation of a lens, as this ratio is directly proportional to the optical power of the lenses. This selection is not possible in beam steerers employing mirrors. The lenses can be chosen so that this ratio is small enough to give more accurate beam steering than was possible hitherto with beam steerers employing mirrors. In addition, the invention permits a light signal having an undivided wave front to be transmitted.

Advantageously, the displacing means is arranged to translate the lenses along orthogonal axes. This feature permits the beam to be steered in any direction within a cone, the limits of which correspond to the maximum angular deflection.

The displacing means preferably incorporates one or more electromagnetic actuators, for instance voice coils.

Advantageously, the lenses have a focal length of at least ten centimetres and a maximum aperture of one centimetre.

The invention will now be described, by way of example, with reference to the accompanying drawings in which:-
Figure 1 is a schematic diagram of satellites incorporating beam steerers constructed according to the invention;
Figure 2 is a schematic diagram of a fine steering mechanism of a beam steerer of Figure 1; and
Figures 3 and 4 are schematic diagrams showing the lenses of the mechanism of Figure 2 in use.

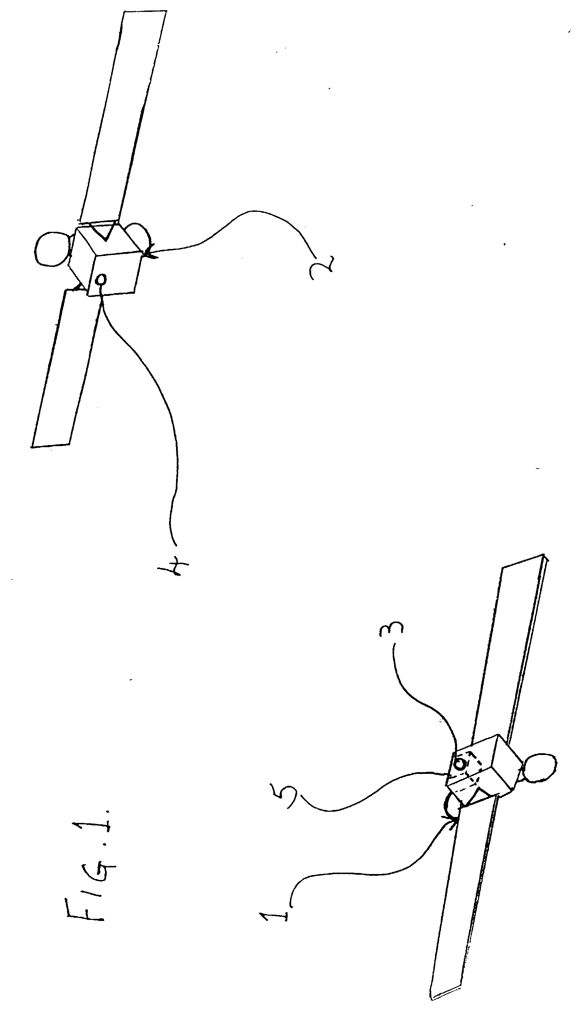

Referring to Figure 1, two satellites indicated generally by the reference numerals 1 and 2 are shown in orbit around the earth. Information such as data, pictures or speech is transmissible between satellites 1 and 2 by means of an infrared beam of laser light. Each satellite has an optical device comprising an optical transmitter and an optical receiver, so that light signals can be transmitted from satellite 1 to satellite 2 and vice versa, i.e. the satellites are bidirectionally linked.

Consider the case of a light signal being transmitted from an optical transmitter 3 on satellite 1 to an optical receiver 4 on satellite 2. In order to direct the transmitted light signal towards the receiver 4 on satellite 2, the transmitting satellite 1 incorporates a beam steerer 5 indicated generally by broken lines. The beam steerer has a coarse steering mechanism (not shown), which steers the beam in approximately the desired direction. Coarse steering typically involves the gimballing of a large optical element e.g. a large mirror, a telescope or even an entire optical system. It is desirable to be able to fine steer the beam to a greater precision than is achievable by coarse steering alone, in order to illuminate accurately the receiver 4 on satellite 2. Furthermore, slight disturbances which can occur within a satellite can cause a light signal to miss its target. The firing of ion thrusters and the acoustic output of mechanisms, such as reaction wheels, can cause such disturbances. The bandwidth of these disturbances is very broad and extends from very low frequencies up to several hundred Hz.

Therefore, it is desirable to be able to steer the laser beam both quickly and accurately so that the optical receiver 4 is continuously illuminated during transmission of the light signal.

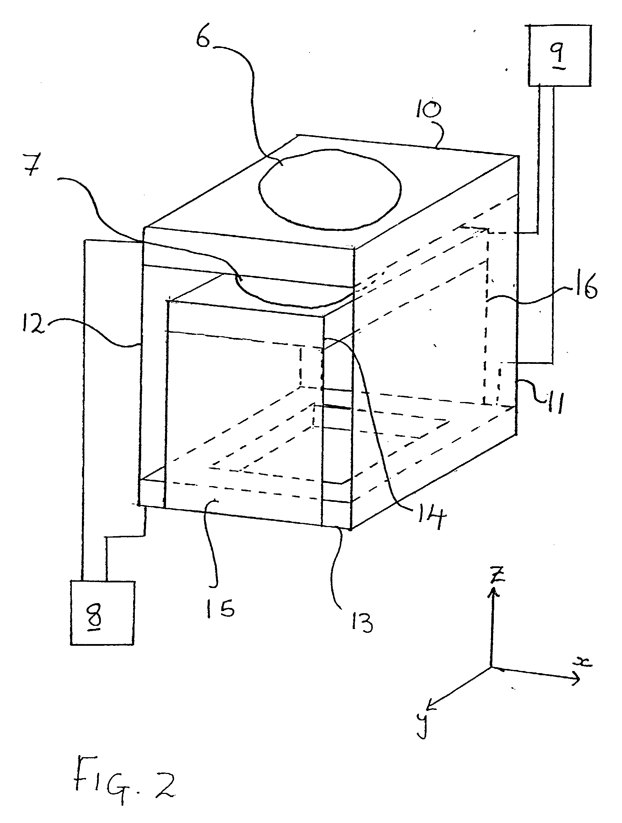

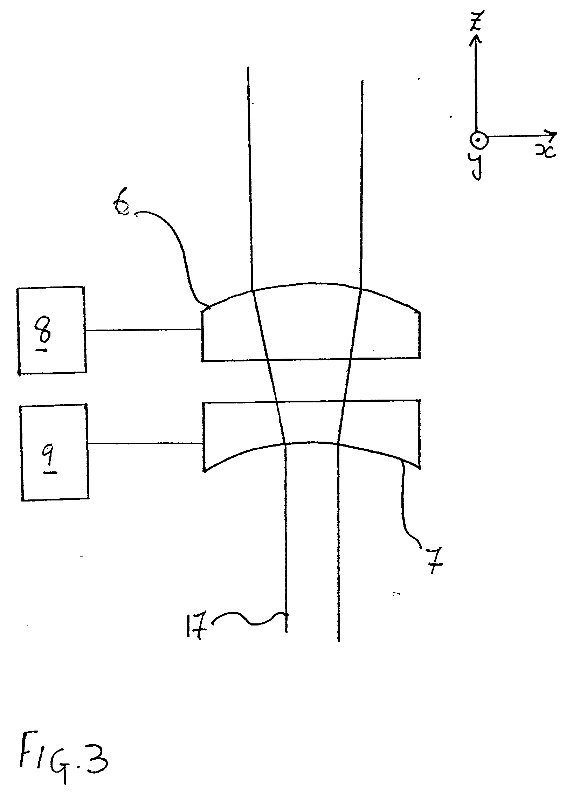

In order that the light signal may be steered precisely, the beam steerer includes a fine steering mechanism as shown schematically in Figure 2.

The fine steering portion of the beam steerer comprises lenses 6 and 7 and displacing means in the form of voice coils, which are represented by boxes 8 and 9 for clarity. The lenses 6 and 7 have substantially the same optical power, but are of opposite sign i.e. lens 6 is positive and lens 7 is negative.

Lens 6 is fixed in a lens mount 10. Flexures 11 and 12, which are shown as thin, flexible blades, extend transversely from two opposite sides of the mount 10, the other ends of the flexures being attached to two opposite sides of a support frame 13. Lens 7 is also fixed into a mount 14. Flexures 15 and 16 extend from the other opposite sides of the frame 13 and are fixed to opposite sides of the mount 14. The lenses 6 and 7 are arranged to be as close as possible whilst still allowing independent movement of each lens. Preferably, the lenses 6 and 7 are optically coaxial. However, the beam steerer is relatively insensitive to misalignment of the lenses, such as displacement of one lens along the optical axis, tilting of the optical axis of one lens with respect to that of the other or misalignment of the beam steerer with respect to the light beam to be steered. This is advantageous over prior art beam steerers employing mirrors which have to be accurately aligned in the optical system of the transmitter or receiver.

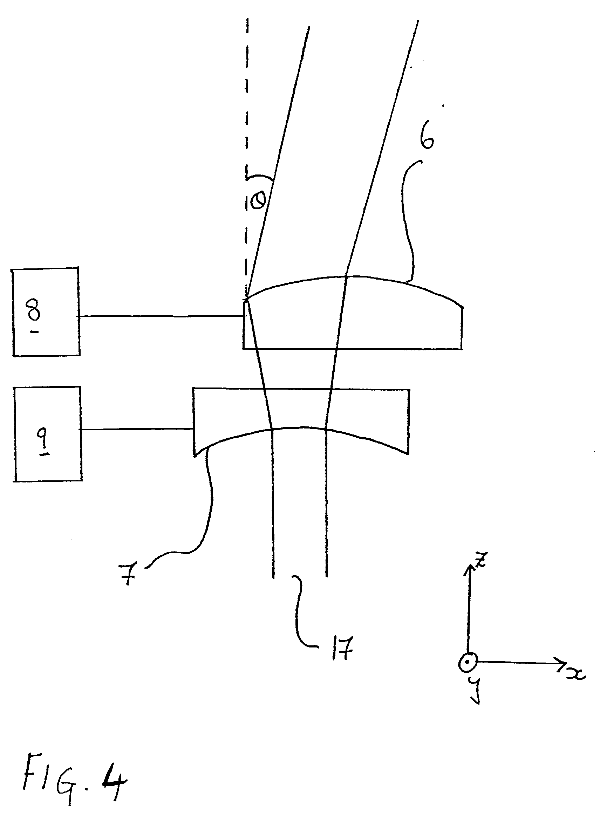

With reference to Figures 2 and 3, a light signal 17, in the form of a collimated laser beam, is transmitted along the z-axis and, because the lenses 6 and 7 have equal and opposite focusing power, the emerging beam is also collimated. In order to deflect the light signal 17 through a desired angle, the lens displacing means, i.e. one of or both voice coils 8 and 9, is actuated.

A voice coil is an example of an electromagnetic actuator, that is to say, a device that converts electromagnetic energy into mechanical work. Voice coils are used typically in loudspeakers. Voice coil 8 comprises a solenoid which translationally moves, relative to a fixed magnet, when a current is passed through it. Voice coil 8 is arranged so that the magnet is attached to frame 14 and the moveable coil acts on lens mount 10. Hence, when actuated, voice coil 8 translates the positive lens 6 along the x-axis. This is shown in Figure 4. The translation of the positive lens 6 with respect to the negative lens 7 causes the collimated beam 17 to emerge tilted at an angle θ to the optical axis, in the x-z plane. The tilt angle θ is dependent on both the relative displacement of one lens with respect to the other and also on the optical power of the lenses. The other voice coil 9, when actuated, translates the negative lens 7 along the y-axis. Such a translation causes an angular deflection of the emerging beam in the y-z plane. The voice coils 8 and 9 are arranged so that motion in both positive and negative x- and y-axes can be effected.

Movement of both lens 6 and lens 7 along the x-axis and y-axis respectively permits the laser beam 17 to be steered to any point within the volume of a cone, the limits of the cone being described by the maximum angular deflection possible (θₘₐₓ) in the x-z and y-z planes. A typical value for θₘₐₓ is ± 10 milliradians.

An alternative arrangement is to employ voice coils to drive one of the lenses along both the x-axis and the y-axis, to steer the beam. However, independent control of the beam along the x-axis and along the y-axis, as described above, is preferable.

The receiving satellite 2 also has a beam steerer constructed according to the invention. The light beam 17 received by receiver 4 on satellite 2 is transmitted through the beam steerer and is input to a position-sensitive detector, such as a CCD. The position of the received signal on the detector is compared with a desired position, which is normally the centre of the detector. An electrical signal is fed back to the voice coils, so that any misalignment of the received beam is corrected. The beam steerer is arranged to be in the paths of both received and transmitted light signals so that corrections applied to the position of an incoming beam automatically ensure that an outgoing beam points in the right direction, i.e. towards the receiver on satellite 1. Satellite 1 also incorporates such a closed-loop feedback circuit to be applied to light signals that it receives.

Lenses particularly suitable for inclusion in the invention are those having apertures of no more than one centimetre and focal lengths of ten centimetres or greater.

Types of lenses that may be employed in the invention include fresnel lenses, diffractive lenses, holographic lenses and compound lenses, although this list is not exhaustive.

A further beam steerer constructed according to the invention may be included in a satellite, in the path of a transmitted light signal, to compensate for the relative velocity of the receiving spacecraft with respect to the transmitting craft. In this application, the light signal is directed just ahead of a receiver on the spacecraft so that, by the time the light signal has reached the receiving craft, the receiver is at that same point.

Further beam steerers may be incorporated in a satellite to direct a plurality of light beams such that the beams are coaligned, each beam steerer being arranged to direct one light beam.

The invention is not limited to providing optical communication between satellites. For instance, it could be used for aircraft to ground, ground to space or ground to ground communications.

Further variations may be made without departing from the scope of the invention. For instance, alternative displacing means, such as piezoelectric elements, may be employed.

The invention is not limited to steering a light signal of infrared laser light, as a light beam of any wavelength may be steered.

## Claims

1. A beam steerer arranged to direct a light signal in a free space optical communications system, the beam steerer characterised by a pair of lenses (6, 7) through which a light signal (17) is transmissible, the lenses having opposite and substantially equal optical power, and displacing means (8, 9) for translating one lens with respect to the other, transverse to an optical axis of the lenses, in order to steer the light signal.

2. A beam steerer as claimed in claim 1, characterised in that the displacing means is arranged to translate the lenses along mutually orthogonal axes.

3. A beam steerer as claimed in claim 1 or 2, characterised in that the displacing means includes an electromagnetic actuator.

4. A beam steerer as claimed in claim 3, characterised in that the linear electromagnetic actuator comprises a voice coil (8, 9).

5. A beam steerer as claimed in any one of claims 1 to 4, characterised in that the focal length of the lenses is at least ten centimetres.

6. A beam steerer as claimed in any one of claims 1 to 5, characterised in that the maximum aperture of the lenses is one centimetre.

7. An optical device including a beam steerer as claimed in any one of claims 1 to 6.

8. A spacecraft including a beam steerer as claimed in any one of claims 1 to 6.
